# EUROPÄISCHE PATENTSCHRIFT

(11) **EP 1 201 856 B1**
(45) Veröffentlichungstag und Bekanntmachung des Hinweises auf die Patenterteilung: **31.08.2005**
(21) Anmeldenummer: 01250375.1
(22) Anmeldetag: 24.10.2001
(51) Int. Cl.: E05C 17/32

(54) **"Klappenbetätigungsvorrichtung"**
Shutter actuating device
Dispositif d'actionnement de volet

(30) Priorität: 27.10.2000 DE 20018730 U
(43) Veröffentlichungstag der Anmeldung: 02.05.2002
(73) Patentinhaber: Innotec Forschungs- und Entwicklungs-GmbH, 95615 Marktredwitz (DE)
(72) Erfinder: Heinl, Thomas, 95679 Waldershof (DE)
(74) Vertreter: Voigt, Günter

(56) Entgegenhaltungen:
- GB-A- 684 826
- US-A- 2 212 977
- US-A- 3 093 258
- US-A- 3 351 369

## Beschreibung

Die Erfindung bezieht sich auf eine Klappenbetätigungvorrichtung, insbesondere eine solche an einem Automobil, im wesentlichen bestehend aus zwei über ein Gelenk untereinander verbundenen Lenkern, wobei das ihnen gemeinsame Gelenk von einer vorgespannten, eine Rückstellkraft abgebenden Drehfeder schmiegend umgeben ist, entsprechend Anspruch 1.

Aus der GB-A-684 826 ist eine solche Klappenbetätigungsvorrichtung, insbesondere an einem Automobil, bekannt, die im wesentlichen aus zwei über ein Gelenk untereinander verbundenen Lenkern besteht, wobei das ihnen gemeinsame Gelenk von einer vorgespannten, eine Rückstellkraft abgebenden Drehfeder schmiegend umgeben ist.

Aus der DE-C2-195 47 257 ist ein Ausgleichselement für eine Klappenöffnung, insbesondere an einem Automobil, mit zwei in dessen Hauptrichtung gegeneinander veränderbaren Endpunkten bekannt, wobei zwei in Wirkverbindung miteinander stehende Auszugsbügel vorhanden sind, die aus in Hauptrichtung langgezogenen schlingenförmigen Windungen bestehen, die um 90° Grad um die Hauptachse verdreht angeordnet sind und so wechselseitig eine längsverschiebliche, aber drehgesicherte Wirkverbindung bilden, wobei die Auszugsbügel von einer Zugfeder umgeben sind, deren Endpunkte nahe den Endpunkten der Auszugsbügel fixiert sind, und wobei die Auszugsbügel aus mehreren übereinanderliegenden, schlingenförmigen Windungen bestehen, wobei die Zugfeder sie schmiegend umfasst und im von beiden Auszugsbügeln gemeinsam umfassten Teil des Hohlraums ein Dämpfungselement angeordnet ist.

Es ist ferner bereits seit langem bekannt, um eine waagerecht liegende Achse drehbare Klappen mit Ketten, Seilen oder Gelenkwinkeln derart zu halten, dass sie in der Öffnungs-Endstellung eine horizontal liegende Fläche darstellen, die sich als praktisch absatzfreie Fortsetzung der eigentlichen Ladefläche darstellt. Diese bereits seit langem bekannten Lösungen bringen jedoch keinerlei Kraftentlastung beim Öffnen oder Schließen der Klappe, die bei Nutzung solcher Klappen sehr erwünscht ist.

Einen gewissen Fortschritt stellen insofern Gasfedern dar, da sie neben einer Auslenkungsbegrenzung auch zu einer Minimierung der erforderlichen Betätigungskräfte führen. Gasfedern sind jedoch dann ungeeignet, wenn es um die unterstützende Steuerung der unteren Heckklappe der Ladeluke eines Kraftfahrzeugs zur Beförderung von Lasten geht. In einem solchen Fall wird die Heckklappe häufig als verlängerte Ladefläche genutzt und ist damit sehr hohen Belastungen ausgesetzt, wobei während der Fahrt noch zusätzlich stoßartige Spitzenbelastungen hinzukommen. Die Kolbenstange und der Kolben einer Gasfeder vermögen solchen Belastungen nicht standzuhalten sondern nehmen unter solchen Umständen vielmehr unvermeidlich Schaden, so dass eine Gasfeder für solche Anwendungen ausscheidet.

Der Erfindung liegt die Aufgabe zugrunde, eine Klappenbetätigungsvorrichtung zu schaffen, bei der die erforderlichen Öffnungs- und Schließkräfte gering sind und die gleichzeitig unbeschadet stoßartige Kräfte aufnehmen kann.

Die Lösung erfolgt mit Hilfe der kennzeichnenden Merkmale des Anspruchs 1.

Vorteilhafte Ausgestaltungen ergeben sich aus den Unteransprüchen.

Die Erfindung wird nachfolgend unter Bezugnahme auf die Zeichnungsfiguren beispielsweise erläutert. Es zeigen:
- Fig. 1: eine prinzipielle Darstellung der Heckpartie eines Kraftfahrzeugs mit zwei schwenkbaren Klappen, wobei die untere Klappe mit einer erfindungsgemäßen Betätigungvorrichtung versehen ist,
- Fig. 2: die gegeneineinander verschwenkbaren Lenker der Betätigungsvorrichtung,
- Fig. 3: eine Einzeldarstellung des Führungsdorns der Drehfeder im gemeinsamen Gelenkpunkt zwischen den verschwenkbaren Lenkern,

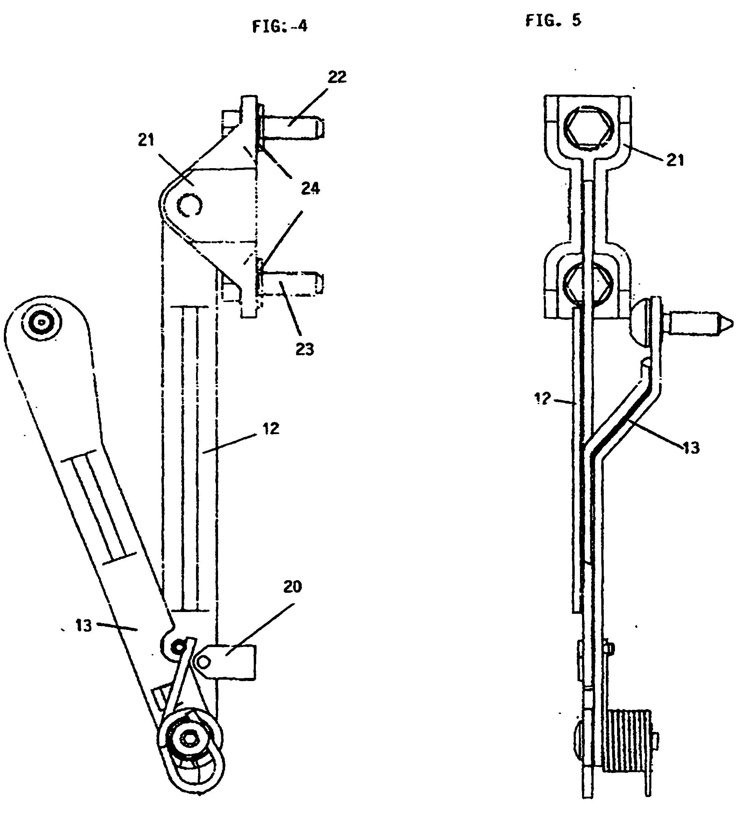

- Fig. 4: eine Seitenansicht der verschwenkbaren Lenker sowie
- Fig. 5: eine zugehörige Draufsicht auf die verschwenkbaren Lenker in der Schwenkebene derselben.

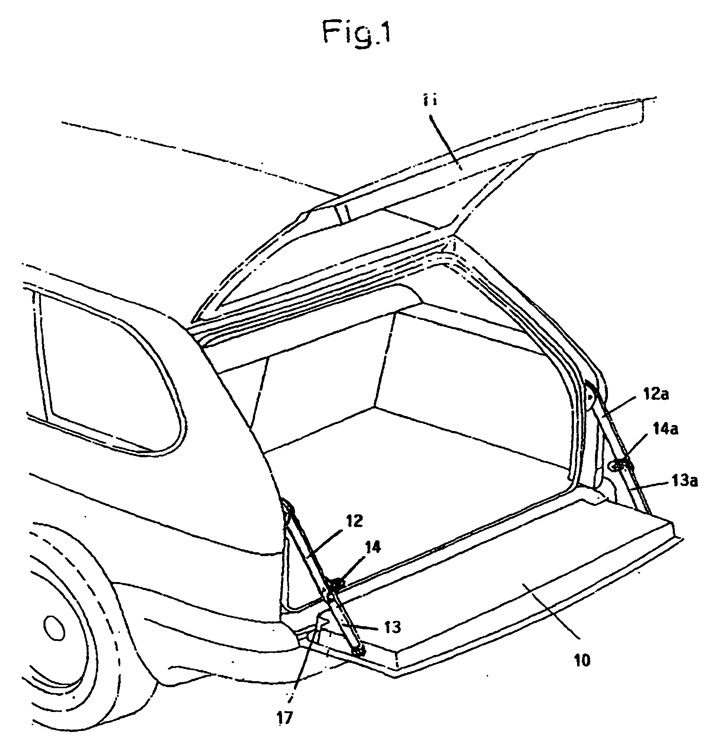

Fig. 1 zeigt den Heckbereich eines Kraftfahrzeugs mit zwei um jeweils eine waagerechte Achse schwenkbaren Klappen 10 und 11. Die aus Lenkern 12, 12a und 13, 13a bestehende Betätigungsvorrichtung ist der Einfachheit halber nur in Verbindung mit der unteren Klappe 10 eingezeichnet, kann aber selbstverständlich grundsätzlich auch in Verbindung mit der oberen Klappe 11 verwendet werden.

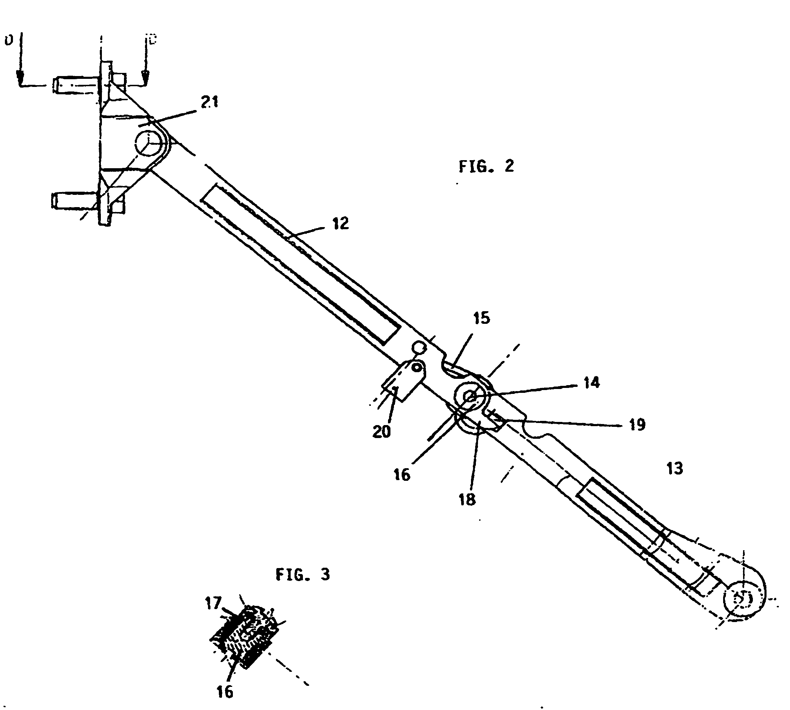

Die aus zwei verschwenkbaren Lenkern 12, 12a und 13, 13a bestehende Betätigungsvorrichtung ist in Fig. 2 dargestellt. Je nach den gewünschten Verhältnissen können die beiden Lenker 12, 12a bzw 13, 13a von gleicher oder auch von unterschiedlicher Länge sein. In dem beiden Lenkern 12, 13 gemeinsamen Drehpunkt 14 ist eine Drehfeder 15, vorzugsweise eine raumsparende Flachdrahtfeder angeordnet. Sie ist um einen in Fig.3 als Einzelelement dargestellten Führungsdorn 16 gewickelt, an dem sie im gespannten Zustand eng anliegt. Um eine gewisse Dämpfung zu erreichen und Klappergeräusche zu vermeiden ist zwischen dem Führungsdorn 16 und der Drehfeder 15 ein elastisches Material, vorzugsweise eine Kunststoffhülse, vorgesehen. Beim Spannvorgang legt sich die den Führungsdorn 16 umschlingende Drehfeder 15 durch Verringerung ihres Innendurchmessers reibungsbehaftet an den Führungsdorn 16 bzw. die diesen umgebende Kunststoffhülse aus elastischem, dämpfenden Material an. Damit ergibt sich an dieser Stelle eine Reibungsdämpfung, was funktional erwünscht ist.

Durch geeignete Längen der Lenker 12, 12a bzw. 13, 13a und deren gezielte Anordnung an Klappe 10 bzw. Fahrzeugkarosse kann erreicht werden, dass die Lenker 12 bzw. 13 mit dem Führungsdorn 16 in den freien Raum 17 im Bereich der Klappe 10 eintauchen und damit verdeckt und gleichzeitig geschützt angeordnet sind.

Bei ungleich langen Lenkern 12, 13 ist vorzugsweise am längeren Lenker 12 bzw. 13 im Endbereich eine schlanke Nase 18 angeordnet, die in der Endlage in Wirkverbindung mit einem Anschlag 19 steht. Durch eine mögliche kraftelastische Verformung von Nase 18 und Anschlag 19 der Anordnung auf der einen oder anderen Seite der Klappe wird ein Toleranzausgleich ermöglicht, der sehr erwünscht ist.

Der Anschlag 19 wird zweckmäßigerweise bereits vor Erreichen einer 180°-Strecklage der beiden Klappelemente zueinander wirksam. Auf diese Weise wird eine Auslenkung über die 180⁰ -Strecklage hinaus ausgeschlossen. Ein Überschreiten der Strecklage durch die Lenker 12, 13 und damit ein ungewolltes Ausweichen zur anderen Seite werden damit ausgeschlossen.

Zusätzlich kann ein Stützlelement 20 vorgesehen werden, das sich beim Hochklappen der Klappelemente an der Karosserie anlegt und unkontrollierte Bewegungen, insbesondere während der Fahrt, verhindert. Damit werden ansonsten denkbare Klappergeräusche vermieden. Auch das Sützelement 20 kann mit einem elastischen und dämpfenden Material überzogen sein.

Mit einem Gelenkbock 21 wird der eine der beiden Lenker 12, 13 an der Karosserie des Fahrzeugs befestigt. Der Gelenkbock 21 besitzt Langlöcher, die einen Toleranzausgleich fahrzeugseitig ermöglichen.

Die Schrauben 22, 23 sind zweckmäßigerweise von Dichtscheiben 24 umgeben, wodurch der darunter liegende Gewindebereich gegen eindringendes Wasser abgedichtet wird. Gleichzeitig können die Dichtscheiben 24 die Funktion eines Verlierschutzes übernehmen. Die ist insbesondere bei einer automatischen Montage von erheblichem Vorteil.

Die oben beschriebene Vorrichtung ermöglicht auch bei geöffneter Ladeklappe die Aufnahme erheblicher Kräfte, ohne dass die Vorrichtung dabei in ihrer Funktion beeinträchtigt oder gar beschädigt wird.

## Patentansprüche

1. Klappenbetätigungsvorrichtung, insbesondere eine solche an einem Automobil, im wesentlichen bestehend aus zwei über ein Gelenk (14) untereinander verbundenen Lenkern (12, 12a; 13, 13a), wobei das ihnen gemeinsame Gelenk (14) von einer vorgespannten, eine Rückstellkraft abgebenden Drehfeder (15) schmiegend umgeben ist, **dadurch gekennzeichnet, dass** zwischen Drehfeder (15) und einem dem gemeinsamen Gelenk (14) zugeordneten Führungsdorn (16) ein elastisches, der Dämpfung dienendes Material angeordnet ist.

2. Vorrichtung nach Anspruche 1, **dadurch gekennzeichnet, dass** die Drehfeder (15) als Flachdrahtfeder ausgebildet ist.

3. Vorrichtung nach einem der Ansprüche 1 oder 2, **dadurch gekennzeichnet, dass** die Lenker (12, 13 bzw. 12a, 13a) unterschiedliche Längen aufweisen.

4. Vorrichtung nach einem der Ansprüche 1 bis 3, **dadurch gekennzeichnet, dass** einer der beiden Lenker (12, 12a; 13, 13a) eine Nase (18) und der andere einen Anschlag (19) aufweist und Nase (18) und Anschlag (19) vor Erreichen der 180°-Strecklage zur Anlage kommen.

5. Vorrichtung nach einem der Ansprüche 1 bis 4, **dadurch gekennzeichnet, dass** ein Lenker (12, 12a; 13, 13a) ein an der Karosserie zur Anlage kommendes Stützelement (20) aufweist.

6. Vorrichtung nach einem der Ansprüche 1 bis 5, **dadurch gekennzeichnet, dass** ein die Verbindung des einen Lenkers (12, 12a bzw. 13, 13a) mit der Karosserie herstellender Gelenkbock (21)vorhanden ist.

7. Vorrichtung nach Anspruch 6, **dadurch gekennzeichnet, dass** der Gelenkbock (21) dem Toleranzausgleich dienende Langlöcher aufweist.

8. Vorrichtung nach einem der Ansprüche 1 bis 7, **dadurch gekennzeichnet, dass** die mit der Karosserie bzw. der Klappe (10) in Verbindung stehenden Schrauben (22, 23) von Dichtscheiben (24) umgeben sind, die gleichzeitig Verlierschutzfunktion haben.

## Claims

1. Flap actuating device, particularly such at an automobile, substantially consisting of two links (12, 12a; 13, 13a) interconnected by way of a joint (14), wherein the joint (14) common thereto is closely surrounded by a biased torsion spring (15) providing a restoring force, **characterised in that** a resilient material serving for damping is arranged between the torsion spring (15) and a guide pin (16) associated with the common joint (14).

2. Device according to claim 1, **characterised in that** the torsion spring (15) is constructed as a flat wire spring.

3. Device according to one of claims 1 or 2, **characterised in that** the links (12, 13 or 12a, 13a) have different lengths.

4. Device according to one of claims 1 to 3, **characterised in that** one of the two links (12, 12a; 13, 13a) has a nose (18) and the other has an abutment (19), and nose (18) and abutment (19) come into contact before reaching the 180° extended position.

5. Device according to one of claims 1 to 4, **characterised in that** a link (12, 12a; 13, 13a) has a support element (20) coming to bear against the bodywork.

6. Device according to one of claims 1 to 5, **characterised in that** a joint lug (21) producing the connection of the one link (12, 12a or 13, 13a) with the bodywork is present.

7. Device according to claim 6, **characterised in that** the joint lug (21) has an elongate hole serving for tolerance compensation.

8. Device according to one of claims 1 to 7, **characterised in that** the screws (22, 23) connected with the bodywork or the flap (10) are surrounded by sealing washers (24) which have at the same time a loss protection function.

## Revendications

1. Dispositif d'actionnement de volets, en particulier de volets de véhicules automobiles, qui se compose pour l'essentiel de deux bras de guidage (12, 12a ; 13, 13a) reliés par une charnière commune (14) entourée de manière souple par un ressort de torsion (15) précontraint qui délivre une force de rappel, **caractérisé en ce que** un matériau élastique servant d'amortisseur est disposé entre le ressort de torsion (15) et une broche de guidage (16) associée à la charnière commune.

2. Dispositif selon la revendication 1 **caractérisé en ce que** le ressort de torsion (15) est constitué d'un ressort à fil plat.

3. Dispositif selon l'une des revendications 1 ou 2 **caractérisé en ce que** les bras de guidage (12,13, respectivement 12a, 13a) sont de longueur différente.

4. Dispositif selon l'une des revendications 1 à 3 **caractérisé en ce que** l'un des bras de guidage (12, 12a ; 13, 13a) comporte un nez (18) tandis que l'autre bras de guidage comporte une butée (19), le nez (18) et la butée (19) venant au contact réciproque avant que la position étendue d'un angle de 180° ne soit atteinte.

5. Dispositif selon l'une des revendications à 1 à 4 **caractérisé en ce que** l'un des bras de guidage (12, 12a ; 13, 13a) comporte une élément d'appui (20) venant au contact de la carrosserie.

6. Dispositif selon l'une des revendications 1 à 5 **caractérisé par** un support d'articulation (21) assurant l'assemblage de l'un des bras de guidage (12, 12a, respectivement 13, 13a) avec la carrosserie.

7. Dispositif selon la revendication 6 **caractérisé en ce que** le support d'articulation (21) comporte des trous oblongs destinés à compenser les tolérances.

8. Dispositif selon l'une des revendications à 1 à 7 **caractérisé en ce que** les vis (22, 23) assurant l'assemblage avec la carrosserie, respectivement le volet (10) sont entourées de rondelles d'étanchéité (24) ayant simultanément une fonction de protection contre la perte.
